# EUROPEAN PATENT SPECIFICATION

(11) **EP 2 957 766 B1**
(45) Date of publication and mention of the grant of the patent: **01.05.2019**
(21) Application number: 15172277.4
(22) Date of filing: 16.06.2015
(51) Int. Cl.: F03D 7/02, F03D 1/06

(54) **PRESSURE SIDE STALL STRIP FOR WIND TURBINE BLADE**
Ein Stall-Strip für ein Windturbinen-Rotorblatt
BANDE DE DÉCROCHAGE POUR PALE D'EOLIENNE

(30) Priority: 17.06.2014 US 201414306381
(43) Date of publication of application: 23.12.2015
(73) Proprietor: Siemens Energy, Inc., Orlando, FL 32826-2399 (US)
(72) Inventor: Zamora Rodriguez, Alonso O., Broomfield, CO Colorado 80020 (US)
(74) Representative: Patentanwaltskanzlei WILHELM & BECK

(56) References cited:
- EP-A2- 2 098 721
- WO-A2-2013/137716

## Description

### STATEMENT REGARDING FEDERALLY SPONSORED DEVELOPMENT

Development for this invention was supported in part by United States Department of Energy contract award number DE-EE0005493. Accordingly, the United States Government may have certain rights in this invention.

### FIELD OF THE INVENTION

The invention relates to methods and apparatus for reducing aerodynamic loads on wind turbine blades, and particularly to reducing negative lift during gusts.

### BACKGROUND OF THE INVENTION

Negative lift is produced by a wind turbine blade airfoil at negative angles of attack. When the blade is operating at a low or zero positive angle of attack, gusts can abruptly alternate the lift between negative and positive, resulting in high stress and fatigue on the blade, rotor, and tower. When this occurs on the radially outer portion of the blade it can cause rapidly alternating flexing of the blade, especially when operating in maximum winds with turbulence. One way to reduce or eliminate negative lift is to stall the pressure side of the blade at negative angles of attack using a pressure side stall strip, as taught in US patent 8,602,739 issued to the present assignee. However, a stall strip can add undesirable drag under some operating conditions. This is addressed by the present invention.

The feature of the first part of claim 1 are known from WO 2013/137716A2. A further wind turbine blade with a transverse sectional profile of a stall strip is known from EP 2 098 721 A2.

### SUMMARY OF THE INVENTION

The object of the invention is to provide an improved wind turbine blade with a stall strip.

This object is met by claim 1. Preferred embodiments are disclosed in the subclaims.

### BRIEF DESCRIPTION OF THE DRAWINGS

Bearing in mind that Fig. 2-6 disclose stall strips not according to the present invention, the concepts relating to the invention are explained in the following description in view of the drawings that show:
FIG. 1 is a transverse sectional profile of a prior art wind turbine blade airfoil.
FIG. 2 is a partial transverse profile of a wind turbine blade airfoil with a pressure side stall strip in an incident wind stagnation zone.
FIG. 3 shows the apparatus of FIG 2 close to zero angle of attack.
FIG. 4 shows of the apparatus of FIG 2 at a negative angle of attack.
FIG. 5 shows the apparatus of FIG 2 at increased positive angle of attack.
FIG. 6 shows a stall strip with forward and aft concave sides.
FIG. 7 shows a stall strip with forward concave side and aft convex side.
FIG. 8 is a graph of coefficient of lift versus angle of attack, with and without a pressure side stall strip.
FIG. 9 is a profile of a pressure side of a radially outer portion of a wind turbine blade.
FIG. 10 shows an exemplary transverse sectional profile of a stall strip.

### DETAILED DESCRIPTION OF THE INVENTION

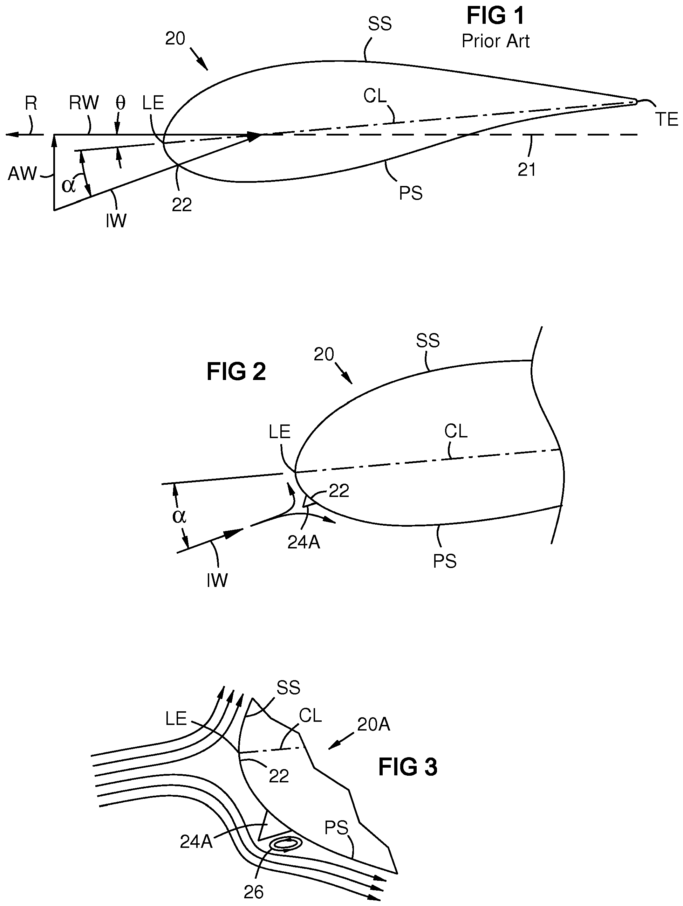

FIG 1 shows a transverse sectional profile of a wind turbine blade 20 with a leading edge LE, trailing edge TE, pressure side PS, and suction side SS. The blade rotates in a rotation direction R in a plane of rotation 21, which results in a relative wind vector RW if the ambient wind is zero. Adding the ambient wind vector AW produces a resultant incident wind vector IW, which defines an angle of attack α between the incident wind vector and the chord line CL. The pitch angle θ is set such that the rotor rotates at a desired blade tip speed and angle of attack suitable for the wind conditions. During normal operation, the incident wind impinges on a forward portion of the pressure side of the airfoil near the leading edge and spreads forward and aft from the line of impingement. This creates a stagnation zone 22 along the line of impingement.

FIG 2 shows a partial airfoil profile 20 with a stall strip 24A in the stagnation zone 22 that occurs at the angle of attack α resulting from a predetermined nominal operating condition. This angle of attack may provide a desired blade tip speed ratio for an operating condition such as 5 to 10% below maximum power or at a minimum ambient condition for rated power. Locating the stall strip 24A in the stagnation zone eliminates drag from the stall strip in this operating condition. The chordwise position of the stagnation zone may vary over the span of the blade. This position can be determined with computational fluid dynamics for a given blade design. The stall strip may be positioned and aligned to stay within the stagnation zone at the predetermined nominal operating condition. Since there is no drag penalty, the stall strip can be taller than in the prior art, and thus more effective at stalling the pressure side of the airfoil at negative angles of attack.

FIG 3 shows the airfoil 20 with a reduced angle of attack, for example close to zero angle of attack during operation at higher than nominal wind speeds. In this condition, the stall strip 24A is aft of the stagnation zone 22. A stable bubble of recirculating flow 26 forms behind the stall strip. This does not cause flow separation from the pressure side of the airfoil. Instead it provides a fairing effect that enables the flow to continue without separating. Drag caused by the stall strip in such high wind condition can be beneficial in limiting the blade rotation speed.

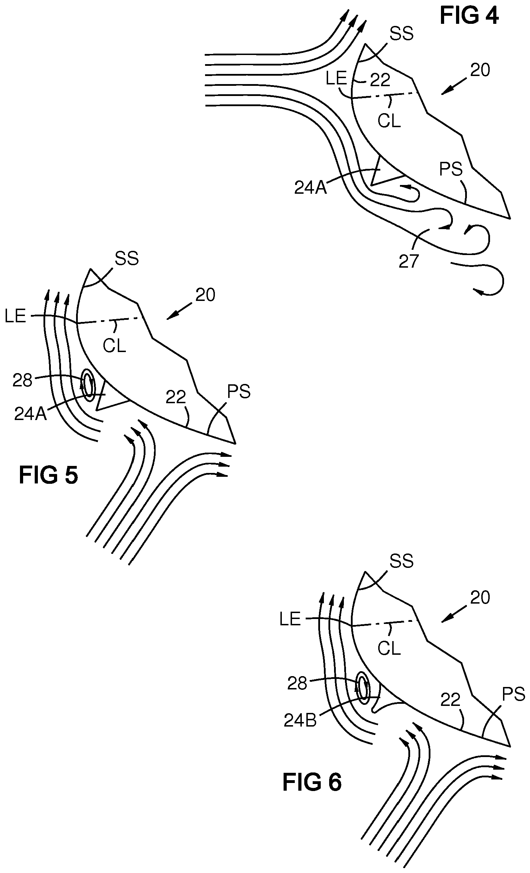

FIG 4 shows the airfoil 20 at a negative angle of attack at which the angle of airflow over the stall strip has burst the recirculation bubble of FIG 3, causing separation 27 of the airflow over the pressure side, and thus reducing negative lift. The angle of attack at which this instability occurs is controllable by the position, size, and sectional shape of the stall strip as later described.

FIG 5 shows the airfoil 20 with an increase in angle of attack over FIG 2. The stagnation zone 22 is now aft of the stall strip 24A. The stall strip may be positioned and shaped to contain a bubble of recirculating air flow 28 on a forward side of the stall strip at angles of attack greater than the nominal angle of attack at the predetermined operating condition up to a maximum operating angle of attack or up to another predetermined angle of attack such as 15 degrees. The forward flow over the stall strip flows over the recirculation bubble 28 and re-attaches to the airfoil boundary layer.

FIG 6 shows a stall strip 24B with concave sides. A concave side aids in forming and maintaining a stable recirculation bubble 28. This shape may be beneficial on either or both of the forward and aft sides of the stall strip to maintain laminar flow except when the angle of attack is below a desired minimum, below which the aft recirculation bubble 26 (FIG 3) bursts, reducing negative lift. This reduces alternating flapwise strains in gusty conditions. "Flapwise" means bending in a plane normal to the chord and normal to the span of the blade.

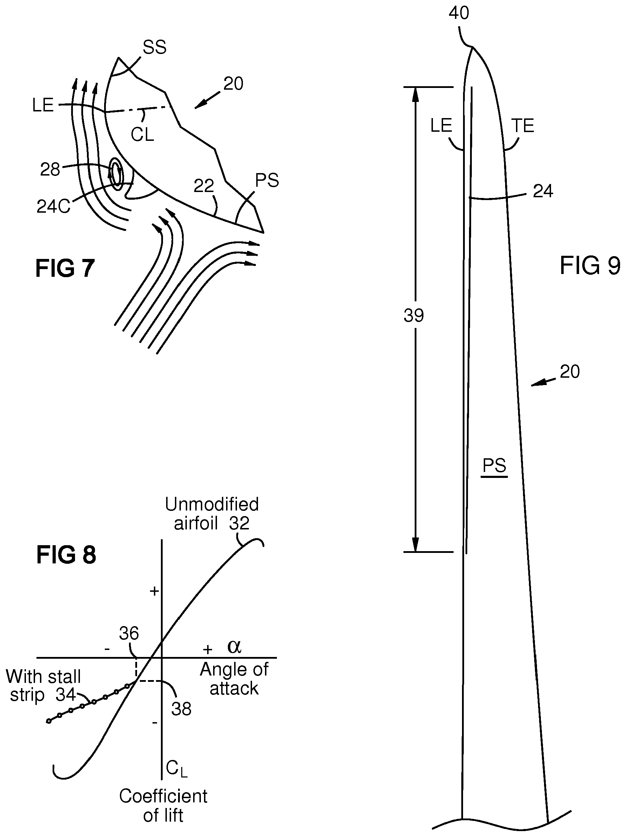

FIG 7 shows a stall strip 24C with a concave forward side and a convex aft side. A concave forward side aids in forming and maintaining a stable forward recirculation bubble 28 under the conditions shown. The convex aft side encourages aft vortex shedding when the stagnation point moves forward of the strip. Vortices and waves shed by the stall strips herein are unlike the vortices created by vortex generators designed to delay flow separation. Vortices shed by stall strips are oriented spanwise. They encourage flow separation, while vortex generators create vortices that are oriented chordwise.

FIG 8 is a graph that compares function curves of lift coefficient C_{L} versus angle of attack α for an unmodified airfoil 32 and a modified airfoil 34 with a pressure side stall strip as taught herein for an exemplary wind turbine blade design. The stall strip may be positioned and shaped to create airflow separation at a particular negative angle of attack 36 or negative lift coefficient 38.

FIG 9 illustrates a stall strip 24 disposed on a pressure side PS of a wind turbine blade airfoil 20. The stall strip may stay within the stagnation zone over at least 15% of the span of the blade for example. The chordwise position of the stagnation zone may vary along the span 39 of the stall strip. For example the chordwise position of the stall strip may vary within a range of 1 % - 25% of the chord, for example between 1% and 5%, along most of the outer 30% of the blade span. "Blade span" means the distance from the blade root to tip 40. "Chordwise position" means the distance from the leading edge along the chord line as a percentage of the chord length. In the example shown, the chordwise position of the stagnation zone increases with radial position along the outer 30% of the blade. The stagnation zone may follow a line or curve, depending on the particular blade design and the chosen nominal operation condition.

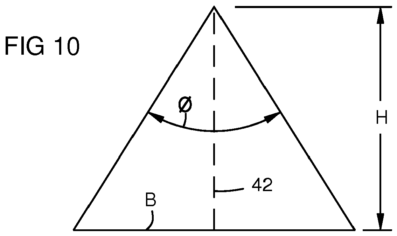

FIG 10 illustrates a triangular cross section of a stall strip having a height H, a base B, an apex angle Ø, and optionally an axis of symmetry 42. Exemplary sectional profiles may be triangular or substantially triangular in some embodiments. For example, the triangle height may be 1-20 mm, and the included angle may be 45 - 150 degrees. Other shapes such as concave/convex triangles as previously shown, fences, or other forms may be used.

In a method of the invention, a nominal operating condition is selected, such as one that produces less than maximum power, and a stall strip is placed within the pressure side stagnation zone that occurs during that condition. This placement eliminates drag from the stall strip at the nominal operating condition. By sizing and shaping the stall strip as described herein, a bubble of recirculating airflow is maintained on the forward and aft sides of the stall strip under respectively greater and lesser angles of attack until a predetermined negative angle of attack or negative coefficient of lift is reached. Then the stall strip separates the airflow on the pressure side of the airfoil. This reduces structural fatigue and maximum stress on the blade, the rotor shaft, and the tower, with no significant performance penalty.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the scope of the appended claims.

## Claims

1. A wind turbine blade comprising a pressure side between a leading edge and a trailing edge, the blade comprising:
a stagnation zone (22) in an incident wind at a predetermined wind turbine operating condition, the stagnation zone extending spanwise along the pressure side of the blade;
a stall strip (24) disposed within and aligned with the stagnation zone over at least 15% of a span of the blade, the stall strip (24) comprising a transverse sectional profile with a concave forward side;
**characterized in that**
the stall strip (24) comprises a convex aft side.

2. The wind turbine blade of claim 1, wherein the stall strip (24) is disposed along a line or curve that varies in chordwise position over said at least 15% of the span of the blade.

3. The wind turbine blade of claim 2, wherein the stall strip (24) varies in chordwise position within a range of 1% - 25% of the chord over said at least 15% of the span of the blade

4. The wind turbine blade of claim 2, wherein the stall strip (24) varies in chordwise position from 1% - 5% of the chord over said at least 15% of the span of the blade

5. The wind turbine blade of any of claims 1 to 4, wherein the stall strip is disposed along a line or curve that increases in chordwise position with radial position on the blade.

6. The wind turbine blade of any of claims 1 to 5, wherein the stall strip (24) comprises a substantially triangular transverse sectional profile with an apex angle of 45 to 150 degrees and a height of 1 to 20 mm.

## Patentansprüche

1. Windturbinenblatt, das eine Druckseite zwischen einer Eintrittskante und einer Austrittskante aufweist, wobei das Blatt Folgendes aufweist:
eine Stauzone (22) in einem Anströmwind unter einer vorbestimmten Windturbinenbetriebsbedingung, wobei die Stauzone in Spannweitenrichtung entlang der Druckseite des Blatts verläuft;
einen Stall-Strip (24), der über mindestens 15% einer Spannweite der Schaufel in der Stauzone angeordnet und darauf ausgerichtet ist, wobei der Stall-Strip (24) ein Querschnittsprofil mit einer konkaven Vorderseite aufweist;
**dadurch gekennzeichnet, dass**
der Stall-Strip (24) eine konvexe Rückseite aufweist.

2. Windturbinenblatt nach Anspruch 1, wobei der Stall-Strip (24) entlang einer Linie oder Kurve angeordnet ist, die bezüglich der Profilsehnenposition über mindestens 15% der Spannweite des Blatts variiert.

3. Windturbinenblatt nach Anspruch 2, wobei der Stall-Strip (24) über mindestens 15% der Spannweite des Blatts bezüglich der Profilsehnenposition in einem Bereich von 1% - 25% der Profilsehne variiert.

4. Windturbinenblatt nach Anspruch 2, wobei der Stall-Strip (24) über mindestens 15% der Spannweite des Blatts bezüglich der Profilsehnenposition von 1% - 5% der Profilsehne variiert.

5. Windturbinenblatt nach einem der Ansprüche 1 bis 4, wobei der Stall-Strip entlang einer Linie oder Kurve angeordnet ist, die bezüglich der Profilsehnenposition mit der Radialposition des Blatts ansteigt.

6. Windturbinenblatt nach einem der Ansprüche 1 bis 5, wobei der Stall-Strip (24) ein im Wesentlichen dreieckiges Querschnittsprofil mit einem Scheitelwinkel von 45 bis 150 Grad und einer Höhe von 1 bis 20 mm aufweist.

## Revendications

1. Pale d'éolienne comprenant un côté pression entre un bord d'attaque et un bord de fuite, la pale comprenant :
une zone stagnante (22) dans un vent incident dans des conditions de fonctionnement prédéterminées de l'éolienne, la zone stagnante s'étendant le long de l'envergure le long du côté pression de la pale ;
une arête de décrochage (24) disposée dans la zone stagnante en alignement avec celle-ci, sur au moins 15 % d'une envergure de la pale, l'arête de décrochage (24) comprenant un profil en section transversale avec un côté avant concave ;
**caractérisée en ce que**
l'arête de décrochage (24) comprend un côté arrière convexe.

2. Pale d'éolienne selon la revendication 1, dans laquelle l'arête de décrochage (24) est disposée le long d'une ligne ou d'une courbe qui varie en position dans le sens de la corde sur lesdits au moins 15 % de l'envergure de la pale.

3. Pale d'éolienne selon la revendication 2, dans laquelle l'arête de décrochage (24) varie en position dans le sens de la corde dans une plage de 1 % à 25 % de la corde sur lesdits au moins 15 % de l'envergure de la pale.

4. Pale d'éolienne selon la revendication 2, dans laquelle l'arête de décrochage (24) varie en position dans le sens de la corde entre 1 % et 5 % de la corde sur lesdits au moins 15 % de l'envergure de la pale.

5. Pale d'éolienne selon l'une quelconque des revendications 1 à 4, dans laquelle l'arête de décrochage est disposée le long d'une ligne ou d'une courbe qui augmente en position dans le sens de la corde avec une position radiale sur la pale.

6. Pale d'éolienne selon l'une quelconque des revendications 1 à 5, dans laquelle l'arête de décrochage (24) comprend un profil en section transversale substantiellement triangulaire avec un angle au sommet de 45 à 150 degrés et une hauteur de 1 à 20 mm.
